# EUROPEAN PATENT SPECIFICATION

(11) **EP 2 765 041 B1**
(45) Date of publication and mention of the grant of the patent: **26.10.2016**
(21) Application number: 13169051.3
(22) Date of filing: 23.05.2013
(51) Int. Cl.: B60T 11/04, B62M 9/127, B62M 25/02, F16C 1/10, F16C 1/26

(54) **Cable for a vehicle**
Kabel für ein Fahrzeug
Câble pour véhicule

(30) Priority: 08.02.2013 TW 102105129
(43) Date of publication of application: 13.08.2014
(73) Proprietor: Yuan-Hung, Wen, Chang Hua County (TW)
(72) Inventor: Yuan-Hung, Wen, Chang Hua County (TW)
(74) Representative: Lang, Christian

(56) References cited:
- CH-A- 201 708
- DE-A1- 2 856 418
- DE-B- 1 126 695
- US-A- 5 636 551
- US-B1- 6 884 481

## Description

### BACKGROUND OF THE INVENTION

### Field of the Invention

The present invention relates to a cable, more particularly, to a cable for a vehicle.

### Description of the Prior Art

Generally, a cable applied to a brake or derailleur of a vehicle such as bicycle or motorcycle is constructed of a plurality of wires, and an outmost sheath is disposed around substantially an entire length of the cable. The brake or derailleur can be controllably driven through the cable driven by a brake lever or shift lever.

The cable, generally, is made by wringing so that it has a twisted circumferential surface, and the cable is telescoped by the outmost sheath along the entire length thereof. As such, it can cause great frictional resistance between the cable and the inner surface of the outmost sheath so as to disadvantage the operation and control of the brake; as the cable and the outmost sheath which always contact each other are used for a long time, the cable and/or the outmost sheath can be abraded and should be replaced. Additionally, water and dust can come into the gap between the cable and the outmost sheath easily, so that the cable is damped and rusted easily, and is not durable.

US6884481 B1 shows a conventional bowden cable with coating on cable and on sheath inside.

Besides, in some conventional structures, plural layers are disposed sequentially around a cable to reduce the frictional resistance between the cable and the inner surface of the outmost sheath so as to avoid the abrasion and damage of the cable. However, the layers are not movable and not slidable with each other, which can still cause great frictional resistance between the cable and the inner surface of the outmost sheath. As such, the layers and/or the cable can be abraded or damaged as they are used for a long time, and hence the layers and/or the cable are not durable and should be replaced frequently.

The present invention is, therefore, arisen to obviate or at least mitigate the above mentioned disadvantages.

### SUMMARY OF THE INVENTION

An object of the present invention is to provide a cable for a vehicle, in which the friction caused due to the axial movement of the center line can be reduced so that the cable can be operated easily, smoothly and precisely; and the center line can be prevented from being damped and rusted so that the cable can function well and the durability thereof is enhanced.

To achieve the above and other objects, a cable for a vehicle includes a center line, a first sleeve, a second sleeve and an outmost sheath. The first sleeve is disposed around the center line and axially movable relative to the center line. The second sleeve is disposed around the first sleeve and axially movable relative to the first sleeve. The outmost sheath is disposed around the second sleeve, and the second sleeve is axially movable relative to the outmost sheath.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a perspective drawing according to a preferred embodiment of the present invention;
Fig. 2 is a longitudinal cross-sectional view of Fig. 1;
Fig. 3 is a radial cross-sectional view of Fig. 1;
Fig. 4 is a perspective drawing according to an alternative embodiment of the present invention;
Fig. 5 is a perspective drawing according to another embodiment of the present invention;
Fig. 6 is partial cross-sectional view of Fig. 5;
Fig. 7 is a drawing showing a cable applied to a bicycle according to a preferred embodiment of the present invention;
Fig. 8 is a partial view of Fig. 7; and
Fig. 9 is a drawing showing a cable applied to a bicycle according to an alternative embodiment of the present invention.

### DETAILED DESCRIPTION OF THE PREFERRED EMBODIMENTS

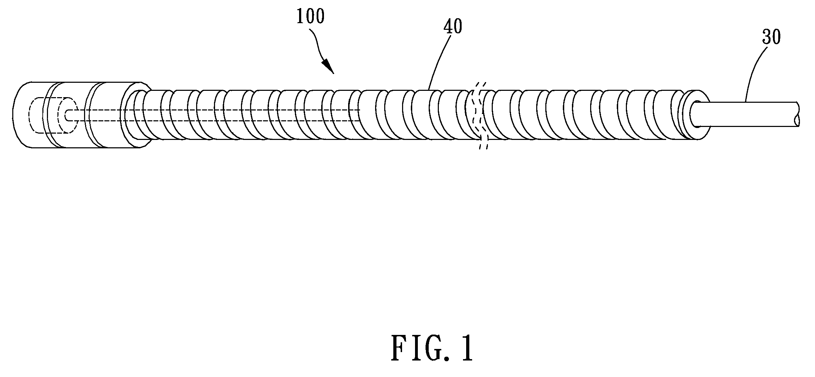

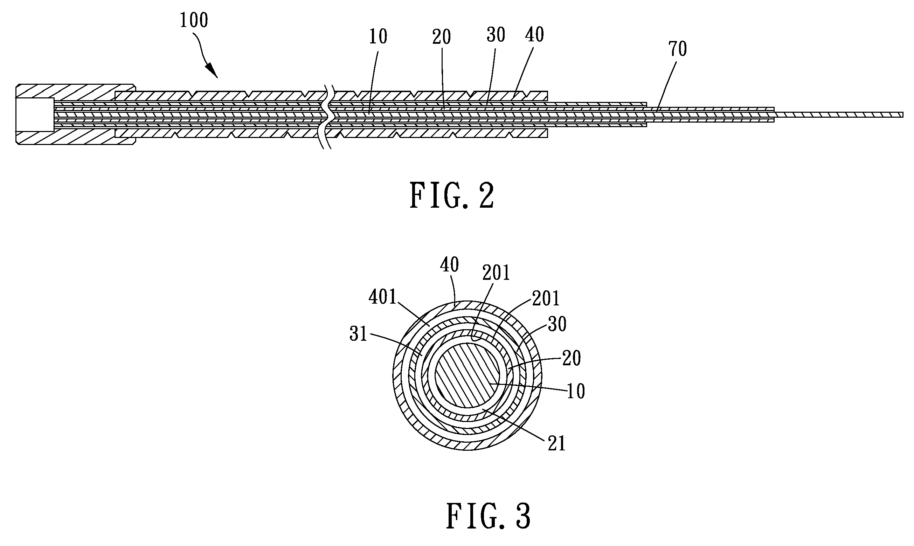

Figs. 1 to 3 show a cable for a vehicle 100 according to a preferred embodiment of the present invention. The cable 100 includes a center line 10, a first sleeve 20, a second sleeve 30 and an outmost sheath 40.

The center line 10 may be made of wires which are wrung and has a twisted circumferential surface, or the center line 10 may be made of a single wire and has a smooth circumferential surface.

The first sleeve 20 is disposed around the center line 10 and is axially movable relative to the center line 10. Preferably, the first sleeve 20 and the center line 10 form a first gap 21 therebetween; however, the first sleeve 20 can slightly contact the center line 10. Preferably, a thin layer 201 having self-lubricating property is disposed at least on inner and outer circumferential surfaces of the first sleeve 20. The thin layer 201 may be made of polytetra fluoroetylene (PTFE, teflon), phenol (PHENOL), ultra-high-molecular-weight polyethylene (UHMW-PE), polypropylene (PP), polyetherether ketone (PEEK), polyphenylene sulfide (PPS) or polychlorotrifluoroethene (PCTFE). The first sleeve 20 may be wholly made of one of the aforementioned self-lubricating materials, or just the inner and outer circumferential surfaces of the first sleeve 20 are provided with two of the aforementioned self-lubricating materials respectively. Preferably, the first sleeve 20 is continuously disposed around substantially an entire length of the center line 10. Since the first sleeve 20 and the center line 10 form the first gap 21 therebetween and the the first sleeve 20 has self-lubricating property, the frictional resistance between the center line 10 and the first sleeve 20 having self-lubricating property can be reduced so as to make a motion such as brake easily, smoothly and precisely.

The second sleeve 30 is disposed around the first sleeve 20 and axially movable relative to the first sleeve 20. The first sleeve 20 and the second sleeve 30 form a second gap 31 therebetween; however, the second sleeve 30 can slightly contact the first sleeve 20. In this embodiment, the second sleeve 30 is disposed around substantially an entire length of the first sleeve 20. However, according to various requirements, the second sleeve 30 may be longer or shorter than that the first sleeve 20 in length. Preferably, the second sleeve 30 is made of plastic material such as polyurethane (PU) or polyethelyne (PE) (preferably) so that the second sleeve 30 is pretty stress-proof, vibration-proof, corrosion-proof, abrasion-proof, weather-proof, pliable, light-weight, tensile and bendable. However, the second sleeve 30 may be made of suitable metal or composite material. In this embodiment, the frictional resistance between the first sleeve 20 and the center line 10 is smaller than that between the second sleeve 30 and the first sleeve 20. As such, as the center line 10 moving axially, the second sleeve 30 is relatively uneasy to move relative to the first sleeve 20, while the center line 10 is relatively easy to move relative to the first sleeve 20, thus reducing the frictional resistance of the axially-moving center line 10 so that the cable 100 can be operated easily, smoothly and precisely.

Preferably, a lubrication matter 70 such as lubrication oil or the like is disposed between the first sleeve 20 and the center line 10, which can further reduce the frictional resistance between the center line 10 and the first sleeve 20. Additionally, the lubrication matter 70 may further encompass the center line 10 so as to prevent the center line 10 from damping and rusting and enhance the durability of the center line 10. Furthermore, the second sleeve 30 and the first sleeve 20 are axially movable relative to each other, and the second sleeve 30 and the outmost sheath 40 are also axially movable relative to each other. As a result, as the center line 10 moves axially to, probably, slight led the first sleeve 20, there will be little frictional resistances between the second sleeve 30 and the first sleeve 20 and between the second sleeve 30 and the outmost sheath 40, thus smoothing the movement of the center line 10; besides, the first gap 21 and the second gap 31 not only facilitate the assembly of the center line 10, the first sleeve 20 and the second sleeve 30 but also provide adequate and sufficient space for bend and deformation of all parts when they are fabricated so that the frictional resistances due to the contact among the center line 10, the first sleeve 20 and the second sleeve 30 are reduced as the cable is bent or deformed.

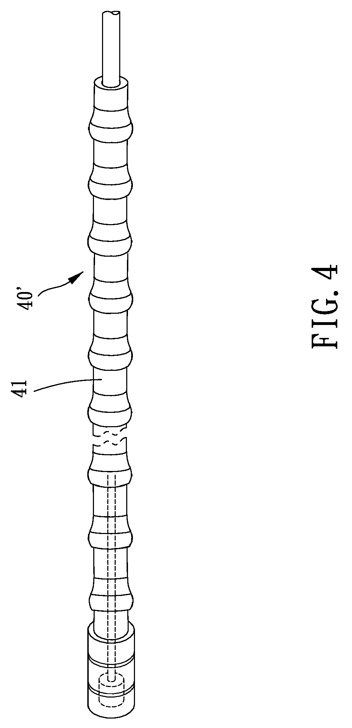

The outmost sheath 40 is disposed around and axially movable relative to the second sleeve 30. In this embodiment, the outmost sheath 40 is disposed around two end portions of the second sleeve 30; however, the outmost sheath 40 may be continuously disposed around substantially an entire length of the second sleeve 30, so as to protect the second sleeve 30 from being damaged by external objects or external forces. The outmost sheath 40 and the second sleeve 30 form a third gap 401 therebetwee. The outmost sheath 40 can provide sufficient support, fixation, protection, guidance to the center line 10. The third gap 401 can reduce the frictional resistance between the outmost sheath 40 and the second sleeve 30 as the center line 10 moves axially, so that the cable 100 can be operated easily, smoothly and precisely. Preferably, the outmost sheath 40 is made of aluminum or stainless steel which is uneasy rusted and can provide good protection to the center line 10, the first sleeve 20 and the second sleeve 30. In this embodiment, the outmost sheath 40 is made of an elongate member being continuously twisted and is shaped in a generally tubular form. However, in a preferred embodiment as shown Fig. 4, an outmost sheath 40' may include a plurality of shell members 41 detachably sequentially connected along the outmost sheath 40' axially.

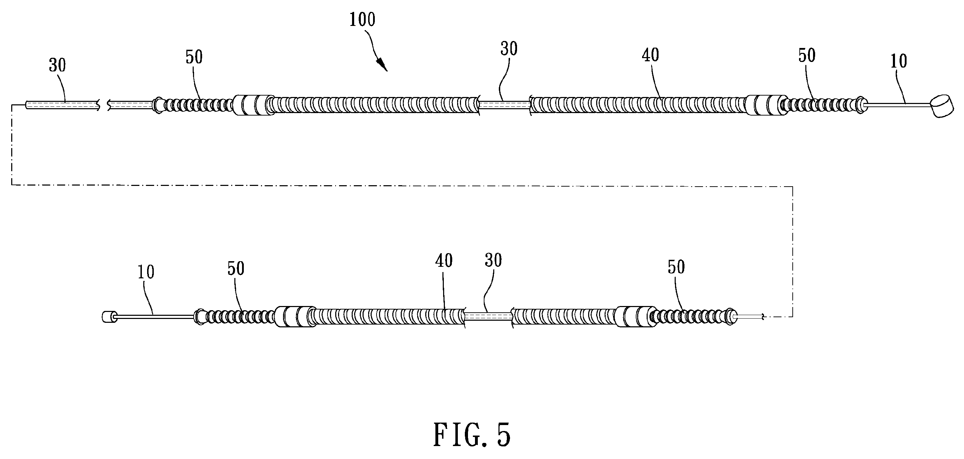

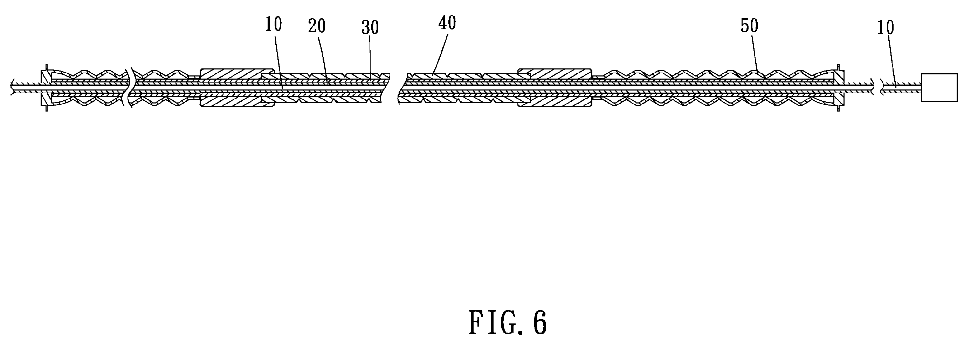

Preferably, as shown in Figs. 5 and 6, a plurality of third sleeves 50 are disposed respectively around two end portions of the center line 10. The third sleeves 50 are preferably axially-deformable and preferably made of plastic material or rubber. The third sleeves 50 can prevent the entering of water and dust into the cable 100, so that the center line 10 can be prevented from being damped and rusted and the center line 10 can function well. Since the third sleeves 50 are axially-deformable, they are suitable to dispose in various spaces.

It is noted that the structure of the cable 100 may be suitably modified. For example, the first sleeve 20, the second sleeve 30 and the outmost sheath 40 may be telescoped around the entire length of the center line 10; or the cable 100 may be provided without any third sleeve.

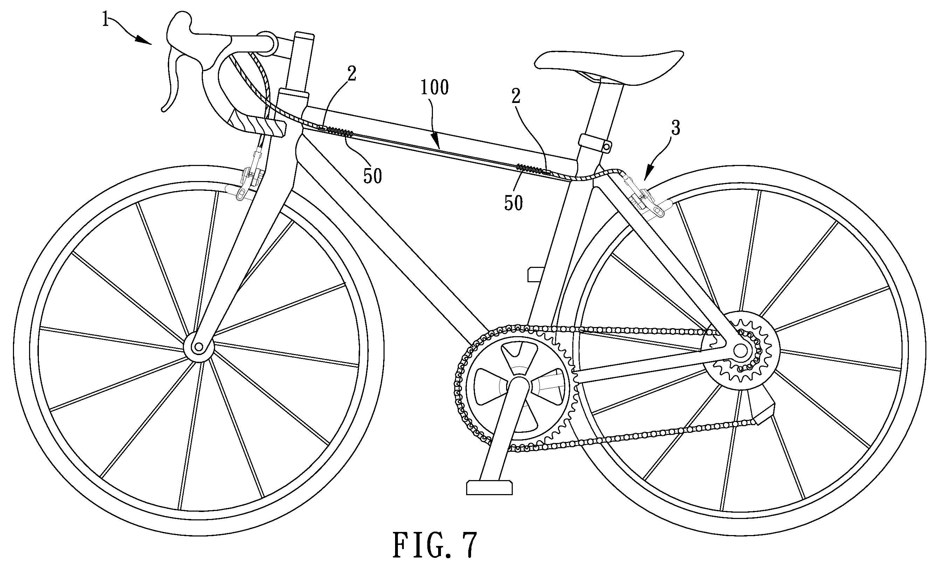

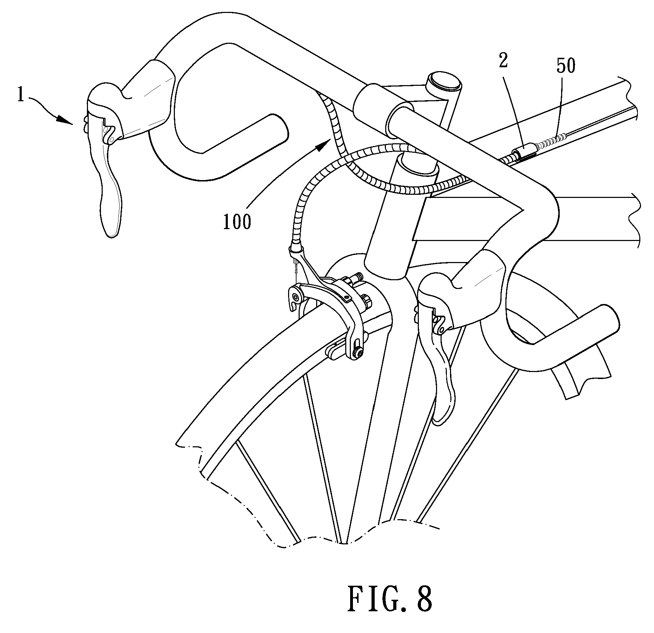

Please referring further to Figs. 7 and 8, the cable 100 may be mounted to a vehicle (such as, but is not limited to, bicycle, motorcycle or car). The vehicle has an operable portion 1, at least two fixation portions 2 for holding the cable 100 and an operated device 3. The operable portion 1 may be a brake lever, shift lever or fluid control operator, and the operated device 3 may be a brake, derailleur or fluid control device.

Two ends of the center line 10 are connected to the operable portion 1 and the operated device 3 respectively. The operated device 3 is controllably operated by the operable portion 1 via the center line 10. For example, the center line 10 may be a brake wire, and a brake can be driven by the brake wire to make a brake through moving a brake lever to pull the brake wire.

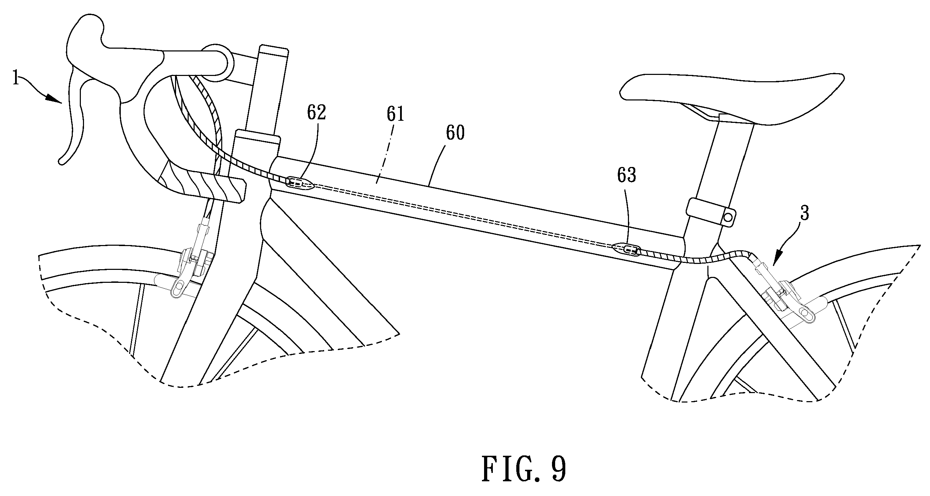

As shown in Fig. 9, in an alternative embodiment, the vehicle has a tube portion 60, wherein the tube portion 60 may be a single tube body or constructed of plural tube bodies. In this embodiment, the tube portion 60 is the top tube of a bicycle, and the tube portion 60 is formed with an inner space 61 and has two fixation portions 62, 63. The two fixation portions 62, 63, in this embodiment, are two openings communicating with the inner space. The telescoped first sleeve and the center line come into the inner space 61 via one of the openings and extend outside the tube portion 60 via the other opening. As such, the effects of preventing the first sleeve and the center line from damping and rusting are further enhanced.

Given the above, by utilizing the cable of the present invention, the friction caused due to the axial movement of the center line can be reduced so that the cable can be operated easily, smoothly and precisely; and the center line can be prevented from being damped and rusted so that the cable can function well and the durability thereof is enhanced.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A cable for a vehicle (100), including:
a center line (10);
a first sleeve (20), disposed around the center line (10) and being axially movable relative to the center line (10);
a second sleeve (30), disposed around the first sleeve (20) and axially movable relative to the first sleeve (20); and
an outmost sheath (40), disposed around the second sleeve (30), and the second sleeve (30) being axially movable relative to the outmost sheath (40).

2. The cable for a vehicle of claim 1, wherein the first sleeve (20) and the center line (10) form a first gap (21) therebetween.

3. The cable for a vehicle of claim 1, wherein the second sleeve (30) and the first sleeve (20) form a second gap (31) therebetween.

4. The cable for a vehicle of claim 1, wherein the outmost sheath (40) and the second sleeve (30) form a third gap (401) therebetween.

5. The cable for a vehicle of claim 1, wherein the frictional resistance between the first sleeve (20) and the center line (10) is smaller than that between the second sleeve (30) and the first sleeve (20).

6. The cable for a vehicle of claim 1, wherein the first sleeve (20) is continuously disposed around substantially an entire length of the center line (10).

7. The cable for a vehicle of claim 1, wherein a lubrication matter (70) is disposed between the first sleeve (20) and the center line (10).

8. The cable for a vehicle of claim 1, wherein a thin layer (201) having self-lubricating property is disposed at least on inner and outer circumferential surfaces of the first sleeve (20), and the thin layer (201) is made of polytetra fluoroetylene (PTFE, teflon), phenol (PHENOL), ultra-high-molecular-weight polyethylene (UHMW-PE), polypropylene (PP), polyetherether ketone (PEEK), polyphenylene sulfide (PPS) or polychlorotrifluoroethene (PCTFE).

9. The cable for a vehicle of claim 1, wherein the second sleeve (30) is made of PE.

10. The cable for a vehicle of claim 1, wherein at least one third sleeve (50) is disposed around at least one of two ends of the center line (10).

## Patentansprüche

1. Kabel für ein Fahrzeug (100), umfassend:
eine zentrale Leitung (10),
eine erste Hülse (20), die um die zentrale Leitung (10) angeordnet ist und relativ zur zentralen Leitung (10) axial bewegbar ist,
eine zweite Hülse (30), die um die erste Hülse (20) angeordnet ist und relativ zur ersten Hülse (20) axial bewegbar ist, und
eine äußerste Ummantelung (40), die um die zweite Hülse (30) angeordnet ist, wobei die zweite Hülse (30) relativ zur äußersten Ummantelung (40) axial bewegbar ist.

2. Kabel für ein Fahrzeug nach Anspruch 1, bei welchem zwischen der ersten Hülse (20) und der zentralen Leitung (10) ein erster Spalt (21) ausgebildet ist.

3. Kabel für ein Fahrzeug nach Anspruch 1, bei welchem zwischen der zweiten Hülse (30) und der ersten Hülse (20) ein zweiter Spalt (31) ausgebildet ist.

4. Kabel für ein Fahrzeug nach Anspruch 1, bei welchem zwischen der äußersten Ummantelung (40) und der zweiten Hülse (30) ein dritter Spalt (401) ausgebildet ist.

5. Kabel für ein Fahrzeug nach Anspruch 1, bei welchem der Reibungswiderstand zwischen der ersten Hülse (20) und der zentralen Leitung (10) kleiner ist als derjenige zwischen der zweiten Hülse (30) und der ersten Hülse (20).

6. Kabel für ein Fahrzeug nach Anspruch 1, bei welchem die erste Hülse (20) durchgängig um im Wesentlichen die gesamte Länge der zentralen Leitung (10) angebracht ist.

7. Kabel für ein Fahrzeug nach Anspruch 1, bei welchem ein Schmiermittel (70) zwischen der ersten Hülse (20) und der zentralen Leitung (10) vorgesehen ist.

8. Kabel für ein Fahrzeug nach Anspruch 1, bei welchem eine dünne Schicht (201) mit einer selbstschmierenden Eigenschaft zumindest an den inneren und äußeren Umfangsflächen der ersten Hülse (20) angeordnet ist, wobei die dünne Schicht (201) aus Polytetrafluorethylen (PTFE, Teflon), Phenol (PHENOL), ultrahochmolekulargewichtigem Polyethylen (ultra-high-molecular-weight polyethylene, UHMW-PE), Polypropylen (PP), Polyetheretherketon (PEEK), Polyphenylensulfid (PPS) oder Polychlortrifluorethylen (PCTFE) gefertigt ist.

9. Kabel für ein Fahrzeug nach Anspruch 1, bei welchem die zweite Hülse (30) aus PE hergestellt ist.

10. Kabel für ein Fahrzeug nach Anspruch 1, bei welchem wenigstens eine dritte Hülse (50) um wenigstens eines der beiden Enden der zentralen Leitung (10) angebracht ist.

## Revendications

1. Câble pour véhicule (100) comprenant :
une ligne centrale (10) ;
un premier manchon (20) disposé autour de la ligne centrale (10) et étant mobile axialement par rapport à la ligne centrale (10) ;
un second manchon (30) disposé autour du premier manchon (20) et mobile axialement par rapport au premier manchon (20) et
une gaine extérieure (40) disposée autour du second manchon (30) et le second manchon (30) étant mobile axialement par rapport à la gaine extérieure (40).

2. Câble pour véhicule selon la revendication 1, le premier manchon (20) et la ligne centrale (10) formant un premier vide (21) entre eux.

3. Câble pour véhicule selon la revendication 1, le second manchon (30) et le premier manchon (20) formant un second vide (31) entre eux.

4. Câble pour véhicule selon la revendication 1, la gaine extérieure (40) et le second manchon (30) formant un troisième vide (401) entre eux.

5. Câble pour véhicule selon la revendication 1, la résistance de friction entre le premier manchon (20) et la ligne centrale (10) étant plus petite qu'entre le second manchon (30) et le premier manchon (20).

6. Câble pour véhicule selon la revendication 1, le premier manchon (20) étant disposé de manière continue autour de substantiellement une longueur entière de la ligne centrale (10).

7. Câble pour véhicule selon la revendication 1, un moyen de lubrification (70) étant disposé entre le premier manchon (20) et la ligne centrale (10).

8. Câble pour véhicule selon la revendication 1, une couche mince (201) ayant une propriété autolubrifiante étant disposée au moins sur des surfaces circonféreritielles intérieures et extérieures du premier manchon (20) et la couche mince (201) étant faite en polytétrafluoroéthylène (PTFE, téflon), phénole (PHENOL), en polyéthylène de poids moléculaire ultra-élevé (UHMW-PE), en polypropylène (PP), en polyétheréthercétone (PEEK), en polysulfure de phénylène (PPS) ou en polychlorotrifluoroéthylène (PCTFE).

9. Câble pour véhicule selon la revendication 1, le second manchon (30) étant fait en PE.

10. Câble pour véhicule selon la revendication 1, au moins un troisième manchon (50) étant disposé autour d'au moins une de deux extrémités de la ligne centrale (10).
